# EUROPEAN PATENT APPLICATION

(11) **EP 2 674 292 A1**
(43) Date of publication of application: **18.12.2013**
(21) Application number: 13170711.9
(22) Date of filing: 05.06.2013
(51) Int. Cl.: B32B 5/02, B32B 5/26, B32B 27/12, E04D 5/10, B32B 11/10, B32B 3/08

(54) **Improved multilayer sheet for the waterproofing of building roofs**

(30) Priority: 14.06.2012 IT MI20120221 U
(71) Applicant: Silcart S.p.A., 31030 Carbonera, Frazione Mignagola TV (IT)
(72) Inventor: Faotto, Ugo, I-31030 Carbonera, TREVISO (IT)
(74) Representative: Mozzi, Matteo

(57) **Abstract**

The present invention relates to a multilayer sheet (100; 200) for waterproofing a roof of a building. The sheet comprises:
- a fibrous material layer (12; 22);
- a water-proof membrane (13; 23) connected to the fibrous material layer along the entire surface thereof;
- at least one sheet peripheral region (14; 24) configured to be unmovably fixed to the roof of a building.

The multilayer sheet is characterized in that it further comprises a mesh (15; 25) interposed between the fibrous material layer (12; 22) and the water-proof membrane (13; 23). Such mesh (15; 25) extends limited to said at least one sheet peripheral region.

## Description

The present invention relates to a multilayer sheet for waterproofing roofs of buildings, particularly to a multilayer under-tile sheet.

As it is known, in the manufacturing of roofs or similar covering of buildings, it is necessary to insert sheets capable of making the roofs impermeable to water, and permeable or impermeable to water vapor, as well as to ensure a suitable thermal insulation of the building.

Generally, waterproofing under-tile sheets are located in ventilation compartments of a roof, which are arranged below the covering tiles, for example, above a wood decking with inclined pitches of the roof. In such a manner, the under-tile sheets are interposed between the above-mentioned decking and an insulation panel.

Such under-tile sheets are generally secured to the pitched decking of the roof by means of staples or nails applied at a peripheral edge or selvedge of the sheet.

However, the under-tile sheets of a known type that are secured to the roof may be subjected to tears or lacerations, particularly when they are subjected to mechanical stresses in a direction substantially transversal to the above-mentioned peripheral edge secured by means of nails to the roof. Such stresses may occur, for example, during the step of securing the sheet to the decking due to the weight of the operator responsible for the laying of the sheet that is on the sheet itself, already secured and in the presence of particularly inclined pitches of the roof. Therefore, the above-mentioned drawback may reduce the safety of the operator himself during the installation step of the sheet.

An aim of the present invention is to devise and provide a multilayer sheet for waterproofing roofs of buildings, or under-tile sheet, which is improved and allows at least partially obviating the drawback set forth herein above with reference to the under-tile sheets of a known type.

Such an aim is achieved by a multilayer sheet for waterproofing roofs of buildings in accordance with claim 1.

Alternative embodiments of such a sheet are described in the dependent claims 2-13.

It is an object of the present invention also a building roof in accordance with claim 14, comprising the multilayer sheet of claim 1.

Further characteristics and advantages of the multilayer sheet according to the present invention will be apparent from the description set forth below of preferred embodiments, given by way of illustrative, non-limiting example, with reference to the appended Figures, in which:
- **Fig. 1** illustrates a portion of a multilayer sheet for waterproofing roofs of buildings according to a first embodiment of the invention in a perspective view;
- **Fig. 2** illustrates a portion of a multilayer sheet for waterproofing roofs of buildings according to a second embodiment of the invention in a perspective view;
- **Fig. 3** illustrates a detail of a multilayer under-tile sheet of Figs. 1 or 2 in a wound configuration;
- **Fig. 4** illustrates an open perspective view of a portion of a pitched roof of a building comprising waterproofing sheets of the invention.

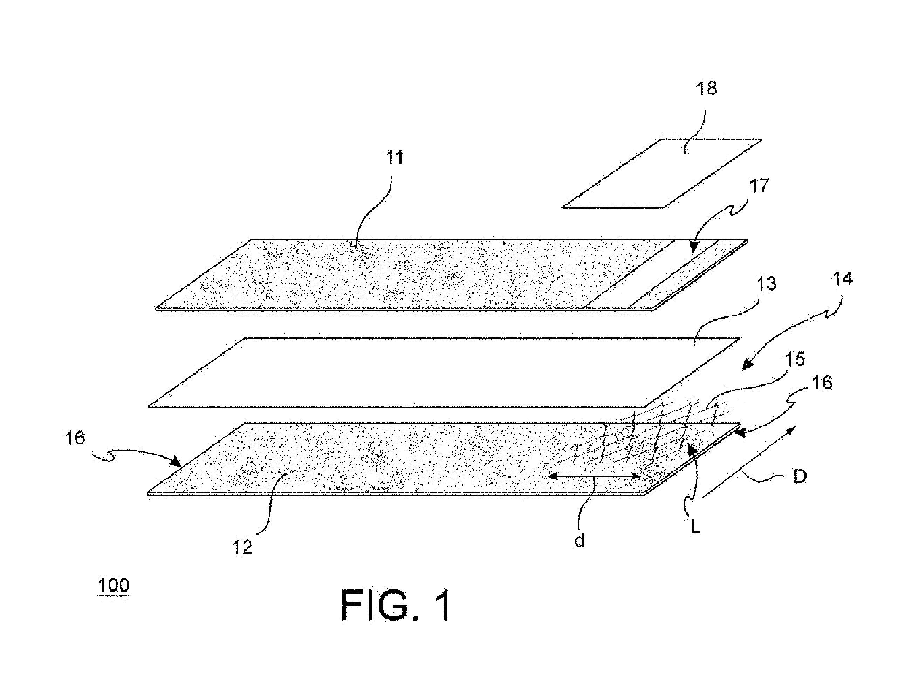

With reference to the above-mentioned Figs. 1-2, a multilayer sheet for waterproofing roofs of buildings or similar coverings, or under-tile sheet, according to the invention on the whole and in two embodiments, is indicated with the references 100, 200. In the above-mentioned Figs. 1-2, the identical or similar elements are indicated by the same numeral references.

Herein below, by the terms "sheet for waterproofing" or "waterproofing sheet", a sheet will be meant, which is configured so as to be water-proof. On the other hand, according to the applications, such waterproofing sheet may be implemented so as to be permeable to water vapor, or only partially permeable to water vapor, or substantially impermeable to vapor. Furthermore, there are sheets configured so as to adapt to the conditions of temperature and relative humidity (RH), and to act as transpiring sheets or as braking sheets. Such sheets are generally referred to as sheets with a variable Sd by those skilled in the art.

With reference to Fig. 1, in a first embodiment, the multilayer sheet 100 comprises three layers, particularly, a first 11 and a second 12 armor layers in a fibrous material and a water-proof membrane 13 interposed between such first 11 and second 12 armor layers. Such armor layers 11, 12 and the membrane 13 are mutually connected on the entire surface.

In more detail, the under-tile sheet 100 is produced by a lamination method that allows securing the first 11 and the second 12 armor layers to the membrane 13. For example, such securing operation may be a cold (ultrasonic lamination) or hot lamination (thermobonding), or such securing operation is performed by using a glue.

The first 11 and the second 12 armor layers are made of a material selected from the group consisting of: a synthetic non-woven fabric or a synthetic fabric, such as, for example, polypropylene, polyester, polyethylene; a composite synthetic non-woven fabric or a composite synthetic fabric; a natural non-woven fabric or a natural fabric. Furthermore, such first 11 and second 12 armor layers have, for example, a basis weight ranging between 20 and 200 g/m².

The membrane 13 is a water-proof film made of a material selected from the group consisting of: polypropylene; polyethylene; polyester; polyurethane, or other polymers. Furthermore, such membrane 13 has, for example, a basis weight ranging between 10 and 100 g/m².

It shall be noticed that the first 11 and the second 12 armor layers are suitable to impart to the sheet 100 a mechanical strength to tearing, crushing, and traction. The membrane 13, in addition to impart waterproofing properties to the sheet 100, has water vapor permeability/impermeability properties. Particularly, according to the characteristics of the membrane 13 that is used, the sheet 100 may be transpiring, with control of vapor penetration, barrier (or with a variable Sd).

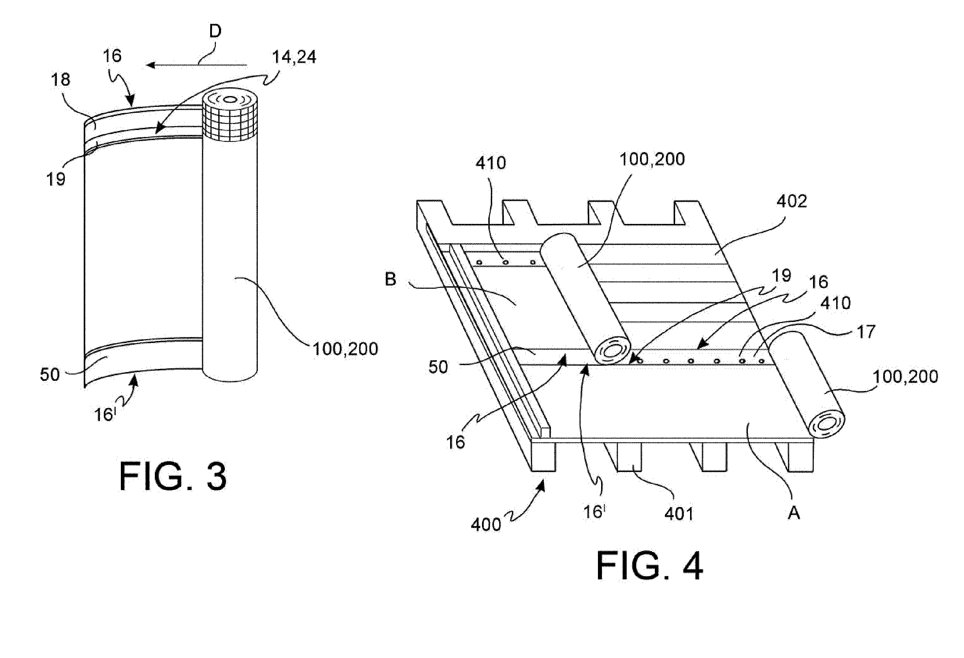

It shall be noticed that the above-mentioned multilayer sheet 100 comprises at least one peripheral region 14 configured to be unmovably secured to the roof of a building. In the example of Fig. 1, such peripheral region 14 is located at one of the edges or selvedges 16 of the sheet 100, particularly one of the edges 16 that extend parallel to a winding/unwinding direction D of the sheet 11. Fig. 3 shows the under-tile sheet 100 of the invention in an almost completely wound configuration and, particularly, the selvedge 16 with the corresponding peripheral region 14 for securing the sheet 100.

The sheet 100 of the invention further comprises a mesh 15 interposed between the second fibrous material layer 12 and the water-proof membrane 13. Alternatively, the mesh 15 may be interposed between the first fibrous material layer 11 and the membrane 13. Advantageously, such mesh 15 extends limited to said peripheral region 14 for securing the sheet, representing a reinforcing layer for the selvedge 16 of the sheet 100 unmovably secured to the roof, for example by means of staples or nails. Particularly, the reinforcing mesh 15 located in the peripheral region 14 of the sheet is suitable to increase a mechanical tearing strength of the sheet 100 itself compared to the tearing strength imparted by the first 11 and the second 12 fibrous material layers.

In more detail, the above-mentioned mesh 15 has a substantially rectangular surface with a first side L extending in the peripheral region 14 parallel to the winding/unwinding direction D of the sheet 100. A second side d of the mesh 15 is substantially orthogonal to the direction D, and it is less than the first side L.

For example, such second side d of the mesh 15 has a dimension ranging between 10-15 cm.

As regards a manufacturing method of the multilayer sheet 100, the first 11 and the second 12 armor layers and the membrane 13 are provided upstream of a production line of the sheet 100 by unwinding them on special unwinders. Before securing the above-mentioned armor layers 11,12 with the membrane 13, also a strip of reinforcing mesh 15 is arranged at the selvedge 16 of the sheet 100 to be arranged between one of the armor layers, in the example, the second layer 12, and the membrane 13.

The armor layers 11, 12, the membrane 13 and the reinforcing mesh 15 are welded to one another by the techniques set forth above (ultrasonic lamination, thermobonding, or securing by using a glue) so as to obtain the incorporation of the membrane 13, and particularly of the mesh 15, within the second armor layer 12, as pointed out in Fig. 3 limited to the peripheral region 14 for securing the sheet 100.

It shall be noticed that, at the securing peripheral region 14, particularly on an outer surface of the first armor layer 11 in the proximity of the selvedge 16, an adhesive band 17 may be advantageously arranged. Such adhesive band 17 is coated with a removable protective film (release film) 18, for example in paper. Such film 18 is removed during the installation of the sheet 100 onto the roof.

With reference to the wound sheet 100 of Fig. 3, it shall be further noticed that the securing peripheral region 14 comprises a corresponding securing zone or strip 19 separated from the corresponding selvedge 16 of the sheet 100 by the adhesive band 17 coated by the removable film 18. Such securing zone 19 identifies a sheet 100 portion in which the securing nails shall be applied.

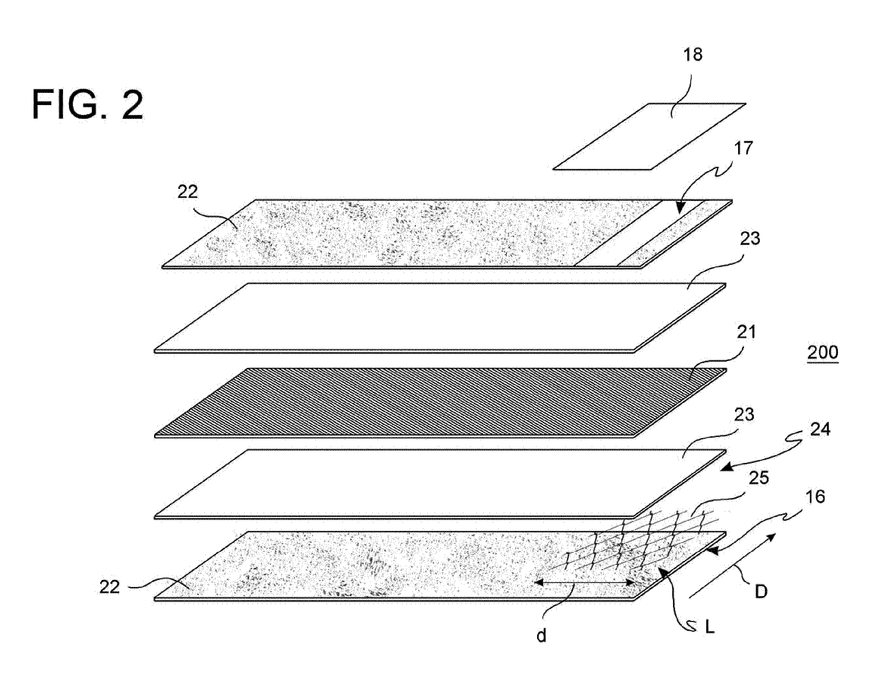

With reference to Fig. 2, in a second embodiment, the multilayer under-tile sheet 200 of the invention comprises a first armor layer 21 in a fibrous material, interposed between two waterproofing membrane layers 23 comprising a blend based on bitumen, polymers, and a filler.

Such first armor layer 21 is made of a material selected from the group consisting of: a synthetic non-woven fabric or a synthetic fabric, such as, for example, polypropylene, polyester, polyethylene; a a composite synthetic non-woven fabric or a composite synthetic fabric; a natural non-woven fabric or a natural fabric; glass fiber. For example, such first 21 armor layer has a basis weight ranging between 50 and 200 g/m².

The under-tile sheet 200 further comprises second layers 22 in a fibrous material, particularly two layers, each of which is connected to one of the above-mentioned membrane layers 23 on the entire surface. In such a manner, each bituminous membrane layer 23 is interposed between the first armor layer 21 and one of the above-mentioned second fibrous material layers 22.

Such second fibrous material layers 22 are for example made of a synthetic non-woven fabric or a synthetic fabric, such as, for example, polypropylene, having a basis weight ranging between 10 and 80 g/m².

Each of the second fibrous material layers 22 represents an external finishing layer of the sheet 200.

It shall be noticed that the first armor layer 21 is suitable to impart a mechanical strength to tearing, crushing, and traction to the sheet 200. The bituminous membranes 23 impart waterproofing properties and water vapor permeability/impermeability properties to the sheet 200.

With reference to the example of Fig. 2, the multilayer sheet 200 comprises at least one peripheral region 24 configured to be unmovably secured to the roof of a building. Such peripheral region 24 is located at a selvedge 16 of the sheet 200, i.e., one of the edges 16 extending parallel to the winding/unwinding direction D of the sheet 200 as shown in Fig. 3.

The multilayer sheet 200 further comprises a corresponding mesh 25 interposed between one of the second finishing fibrous material layers 22 and the adjacent bituminous membrane 23. Advantageously, the mesh 25 extends limited to the peripheral region 24 to secure the sheet 200 to the roof, representing a reinforcing layer for the selvedge 16 of the sheet 200 unmovably secured to the roof. Such mesh 25 is completely similar to the mesh 15 described with reference to the sheet 100.

As regards a manufacturing method of the multilayer sheet 200, the first armor layer 21 in non-woven fabric (for example, polyester or glass fiber) is soaked on both opposite surfaces with the bituminous blend that will form the membrane layers 23. The reinforcing mesh 25 is applied on one of the above-mentioned surfaces of the armor layer 21 coated with the bituminous blend. The mesh 25 and the armor layer 21 mutually adhere by exploiting the adhesive property of the bituminous blend yet not hardened. One of the finishing layers 22 in a fibrous material, applied subsequently onto the mesh 25, concurs to secure it. The other finishing layer 22 is applied onto the bituminous blend 23 on the other surface of the armor layer 21 so as to adhere to such armor layer 21 on the entire surface thereof.

At the peripheral region 24 for securing the sheet 200, particularly on an outer surface of the above-mentioned further finishing layer 22 in the proximity of the selvedge 16, the adhesive band 17 coated with a protective removable film (release film) 18 may be advantageously arranged.

With reference to Fig. 3, the sheets 100, 200 of the invention comprise an overlapping strip 50 at a further selvedge 16' opposite to the one 16 that is mechanically securable to the roof, i.e., the one provided with the adhesive band 17. Such overlapping strip 50 has a width, for example, of 10 cm, similar to the width of the strip defined by the securing peripheral regions 14,24 at the selvedge 16. Such overlapping strip 50 is visually indicated by a special line that is present on the sheets 100, 200.

In an embodiment of the sheets 100, 200, the reinforcing meshes 15, 25 can be provided at both the opposite selvedges 16, 16'.

With reference to Fig. 4, it is possible to schematically describe one of the possible structures of a roof 400 of a building comprising the under-tile sheets 100, 200 of the invention.

Such roof 400 comprises a main structure supporting the same roof including a plurality of beams 401 that are mutually parallel and arranged sloping. Such beams 401 are made, for example, of wood, cement, or in other materials. A decking 402 is on top of the beams 401, for example, a wood decking, secured to the beams 401 themselves.

The multilayer sheets 100, 200 of the invention are unmovably secured on the decking 402. Particularly, the mechanical securing of a sheet 100, 200 to the decking 402, for example, by means of nails 410, is carried out together with the unwinding of the sheet itself, while maintaining the alignment with the pitch line, starting from the eaves, as it is known to those skilled in the art. The first sheet secured to the roof is indicated with A in Fig. 4. The nails 410 are secured at the securing zone 19 of the sheet A described above without interfering with the adhesive band 17 coated by the removable film 18.

Particularly, after securing the first sheet A, the next sheet, or sheet B, is then laid parallel and partially overlapping the previous one. The selvedge 16 mechanically secured to the decking 402 of the sheet A is then coated by the overlapping strip 50 of the further selvedge 16' of the sheet B adhering to the underlying selvedge 16. Particularly, the selvedges 16 and 16' overlapping is promoted by the presence of the adhesive band 17 of the sheet A without the corresponding film 18.

Next, the sheets 100, 200 thus secured to the decking 402 are coated and ballasted to the roof 400 by laying an insulating layer.

The sheets 100, 200, of the present invention have a number of advantages.

Since the mechanical securing of the sheets 100,200 to the building roofs occurs exclusively at a peripheral portion 14, 24 proximal to the selvedges 16, it is not necessary to use reinforcing meshes extending on the entire surface of the sheets. This allows obtaining sheets having tearing and nail laceration strength at .the selvedges 16 that can be compared to those of sheets present in the market, that are often heavier and with high thicknesses.

The sheets of the invention are lighter than the known sheets; therefore, they can be more easily handled and transported.

With the solution of the invention, it is possible to use more inexpensive armor layers, by reinforcing them only where needed. This decreases the overall manufacturing cost of the sheets 100, 200 compared to the sheets currently in commerce, while maintaining the same performance in terms of tearing strength of the latter, and ensuring a high safety for the operators installing such sheets.

Furthermore, the present invention allows producing products with glass fiber armor layers having a tearing strength at the selvedges 16 reinforced by the mesh 15, 25 that is equal to that of the tougher products in polyester.

To the above-described embodiments of an improved multilayer sheet, those of ordinary skill in the art, in order to meet contingent needs, will be able to make modifications, adaptations, and replacements of elements with other functionally equivalent ones, without departing from the scope of the following claims. Each of the characteristics described as belonging to a possible embodiment may be implemented independently from the other embodiments described.

## Claims

1. A multilayer sheet (100; 200) for waterproofing a roof of a building, comprising:
- a layer (12; 22) in a fibrous material;
- a water-proof membrane (13; 23) connected to said fibrous material layer along the entire surface;
- at least one peripheral region (14; 24) of the sheet configured to be unmovably secured to said roof of a building,
**characterized in that** it further comprises a mesh (15; 25) interposed between the fibrous material layer (12; 22) and said water-proof membrane (13; 23), said mesh (15; 25) extending limited to said at least one peripheral region of the sheet.

2. The multilayer sheet (100; 200) according to claim 1, wherein said mesh (15; 25) has a substantially rectangular surface with a first side (L) extending in said at least one peripheral region (14; 24) parallel to a winding/unwinding direction (D) of the sheet, and a second side (d) substantially orthogonal to said winding/unwinding direction (D) of the sheet, said first side (L) being larger than the second side (d).

3. The multilayer sheet (100; 200) according to claim 2, wherein said second side (d) of the mesh (15; 25) has a dimension ranging between 10-15 cm.

4. The multilayer sheet (100; 200) according to claim 1, further comprising a further fibrous material layer (11; 21), said membrane (13; 23) being interposed between said fibrous material layer (12; 22) and said further layer.

5. The multilayer sheet (100) according to claim 4, wherein said layer (12) and further fibrous material layer (11) are armor layers of the sheet, made of a material selected from the group consisting of:
- a synthetic non-woven fabric or a synthetic fabric, such as, for example, polypropylene, polyester, polyethylene;
- a composite synthetic non-woven fabric or a composite synthetic fabric;
- a natural non-woven fabric or a natural fabric.

6. The multilayer sheet (100) according to claim 4 or 5, wherein said fibrous material layers (11, 12) have a basis weight ranging between 20 and 200 g/m².

7. The multilayer sheet (100) according to claim 1, wherein said membrane (13) is made of a material selected from the group consisting of:
- polypropylene;
- polyethylene;
- polyester;
- polyurethane;
- other polymers.

8. The multilayer sheet (100) according to claim 7, wherein said membrane (13) has a basis weight ranging between 10 and 100 g/m².

9. The multilayer sheet (200) according to claim 4, wherein said further fibrous material layer (21) is a armor layer of the sheet made of a material selected from the group consisting of:
- a synthetic non-woven fabric or a synthetic fabric, such as, for example, polypropylene, polyester, polyethylene;
- glass fiber;
- a composite synthetic non-woven fabric or a composite synthetic fabric;
- a natural non-woven fabric or a natural fabric.

10. The multilayer sheet (200) according to claim 9, wherein said further armor layer (21) has a basis weight ranging between 50 and 200 g/m².

11. The multilayer sheet (200) according to claim 1, wherein said fibrous material layer (22) is a finishing layer of the sheet made of a synthetic non-woven fabric or a synthetic fabric, such as, for example, polypropylene.

12. The multilayer sheet (200) according to claim 1, wherein said waterproofing membrane (23) is produced with a blend comprising: bitumen, polymers, and a filler.

13. The multilayer sheet (100; 200) according to claim 1, further comprising an adhesive band (17) coated with a removable film (18), at said at least one peripheral securing region (14, 24).

14. A roof (400) of a building, comprising:
- a main roof supporting structure (401, 402);
- at least one waterproofing multilayer sheet (100; 200) in accordance with claim 1, secured to said main supporting structure.
